Europäisches Patentamt

European Patent Office

Office européen des brevets

(11) Publication number: **0 300 729**
**A2**

(12) # EUROPEAN PATENT APPLICATION

(21) Application number: **88306588.0**

(22) Date of filing: **19.07.88**

(51) Int. Cl.⁴ **G06K 7/12**

(30) Priority: **20.07.87 JP 179209/87**

(43) Date of publication of application:
**25.01.89 Bulletin 89/04**

(84) Designated Contracting States:
**DE FR GB IT**

(71) Applicant: **KABUSHIKI KAISHA EMPIRE
AIRPORT SERVICE
2-2, Tomioka-Higashi 2-chome Kanazawa-ku
Yokohama-shi Kanagawa-ken(JP)**

(72) Inventor: **Horiuchi, Mikio
16-26-202, Kikunodai 2-chome
Chofu-shi Tokyo(JP)**

(74) Representative: **Bridge-Butler, Alan James et
al
G.F. REDFERN & CO. High Holborn House
52/54 High Holborn
London WC1V 6RL(GB)**

(54) **Bar code, bar code system and bar code reading method.**

(57) A bar code is printed with a transparent fluorescent ink or a transparent polymeric ink which is generally invisible. The bar code is read by emitting ultraviolet or infrared radiation to the bar code and by determining the difference in the intensity of a light reflected by the bar code which is caused by a different reflectivity of the bar code. In other words, the bar code printed with the invisible ink is made visible by emitting radiation with a particular wavelength thereto. In consequence, since the bar code is invisible in a normal state, there is no restrictions on the package design. Further, the length of a bar of the bar code can be made long, thereby greatly improving the reading accuracy.

```
        ┌──────────────┐
        │    START     │
        └──────┬───────┘
               │
   ┌───────────────────────┐  S1
   │  PACKAGE  DESIGNING    │
   └───────────┬───────────┘
               │
   ┌───────────────────────┐  S2
   │  DETERMINATION  OF     │
   │  SIZE AND POSITION     │
   │  OF  BAR  CODE         │
   └───────────┬───────────┘
               │
   ┌───────────────────────┐  S3
   │  PRINTING OF PACKAGE   │
   │  WITH VISIBLE INK      │
   └───────────┬───────────┘
               │
   ┌───────────────────────┐  S4
   │  PRINTING OF BAR CODE  │
   │  WITH INVISIBLE INK    │
   └───────────┬───────────┘
               │
   ┌───────────────────────┐  S5
   │      PACKAGING         │
   └───────────┬───────────┘
               │
        ┌──────────────┐
        │     END      │
        └──────────────┘
```

F I G. I

## BAR CODE, BAR CODE SYSTEM, AND BAR CODE READING METHOD

BACKGROUND OF THE INVENTION

Field of the Invention:

The present invention relates to a bar code having a bar code portion printed with an invisible ink, a bar code system, and a bar code reading method.

In a conventional bar code system, a bar code to be read is printed with a black or blue visible ink.

Consequently, a large area cannot be allocated to the printing of a bar code on goods, and the printing of a bar code on the surface or at the central portion of the goods is undesirable from the aesthetic viewpoint. In recent years, it has become increasingly clear that the design element of most goods is a very important aspect of any sales effort and the importance of package design has thus been highlighted. This factor has made the positioning of a bar codes much more difficult.

No matter how well the bar code is designed, it is quite rare for the appearance of a bar code portion to be made attractive. Further, if the area in which the bar code is printed is made smaller, recognition of the bar code becomes increasingly difficult.

SUMMARY OF THE INVENTION

An object of the present invention is to provide a bar code, a bar code system, and a bar code reading method which enable the above-described problems of the prior art to be eliminated.

To this end, the present invention provides a bar code system for reading a bar code printed with an invisible ink, which comprises: means for oscillating radiation with a predetermined wavelength beyond a visible spectrum; means for receiving light which is output from the radiation oscillating means and which is reflected by a bar code printed surface; and means for recognizing a bar code on the basis of the intensity of light received by the light-receiving means. The present invention also provides a bar code which comprises: a bar code printed surface which includes a visible portion printed with a visible ink, if necessary, and a bar code portion printed with an invisible ink on the visible portion.

In the thus-arranged present invention, since the bar code portion is invisible, the bar code portion has no adverse effect on the package design. This allows the appearance of the package to be kept attractive, and facilitates package design. Further, a large area can be allocated to the printing of a bar code, which in turn allows the recognition efficiency to be greatly improved.

BRIEF DESCRIPTION OF THE DRAWINGS

Fig. 1 shows bar code printing processes, showing an embodiment of the present invention;

Fig. 2 (A) shows an example of a frame which indicates the position at which a bar code is printed in the printing processes shown in Fig. 1;

Fig. 2 (B) shows an example of marks which indicate the position at which a bar code is printed in the printing processes shown in Fig. 1; and

Fig. 3 is a block diagram of a bar code reading device of the present invention, showing an embodiment of the present invention.

DETAILED DESCRIPTION OF THE PREFERRED EMBODIMENTS

Embodiments of the present invention will be hereinunder described in detail with reference to the accompanying drawings.

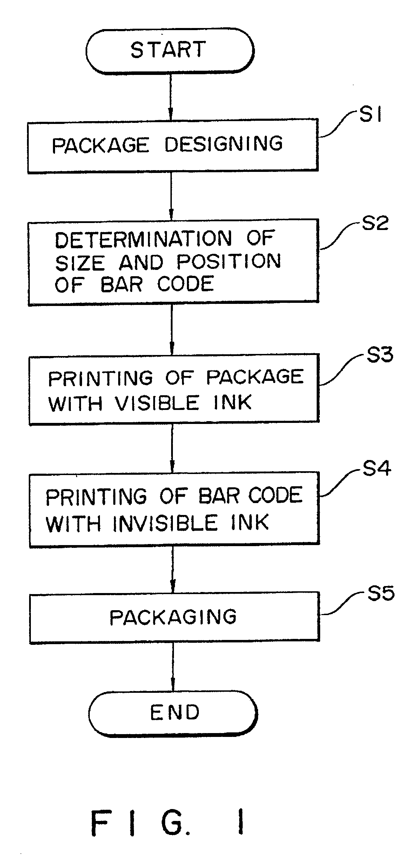

Procedure of preparing a package with a bar code printed thereon will be described below with reference to Fig. 1 which shows an embodiment of the bar code printing processes according to the present invention.

In this embodiment, a bar code is printed with an invisible ink, and is therefore invisible. In consequence, it is not necessary to take into consideration the area at which the bar code is printed when a package is designed.

In a step S1, a package is designed as desired with the goods to be packed and the size thereof taken into consideration. After the package design has been completed, the position and the size of a bar code to be printed are determined in a step S2. Bar codes may be printed at more than one positions. A bar code having any desired bar length may be printed since the bar code has no adverse effect on the package design. The WPC (World Product Code), UPC (Universal Product Code) or JIS-B-9550, in addition to German Code, may be employed in this embodiment. In each code, each bar in the bar code may have any length, as has been described above.

Thus, there are a very few restrictions on package design. After the design of the package has

been completed, manufacure of the package starts.

First, in step S3, a base paper (a base material) is printed in accordance with the package design prepared in the previous step using a normal visible ink. Subsequently, a bar code is printed on the printing using a transparent fluorescent ink in step S4.

After printing of the package has been completed, packing is done in step S5 so as to prepare a product.

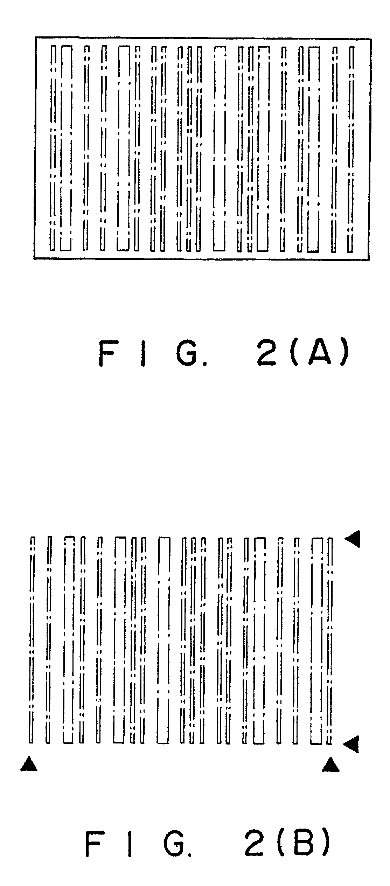

Since the bar code is printed with the invisible ink, the printed site thereof cannot be seen. Therefore, a frame may be printed with the visible ink at a position at which the bar code is printed so as to enable the printed site thereof to be recognized. Alternatively, special marks may be employed to indicate the print starting position and the print ending position. In any of these cases, only the frame or marks are visible, and therefore has no adverse effect on the package design. Fig. 2 (A) shows an example of the frame, and Fig. 2(B) indicates an example of the marks. In both cases, a very small area is used to print the frame or the marks, and therefore the frame or the marks does not damage the package design.

In this embodiment, a transparent fluorescent ink is used as the invisible ink.

The reflectivity of the ultraviolet radiation is changed by the fluorescent ink when they are caused to irradiate the package. However, any invisible ink by which the reflectivity of the invisible light such as ultraviolent or infrared radiation is changed may be employed.

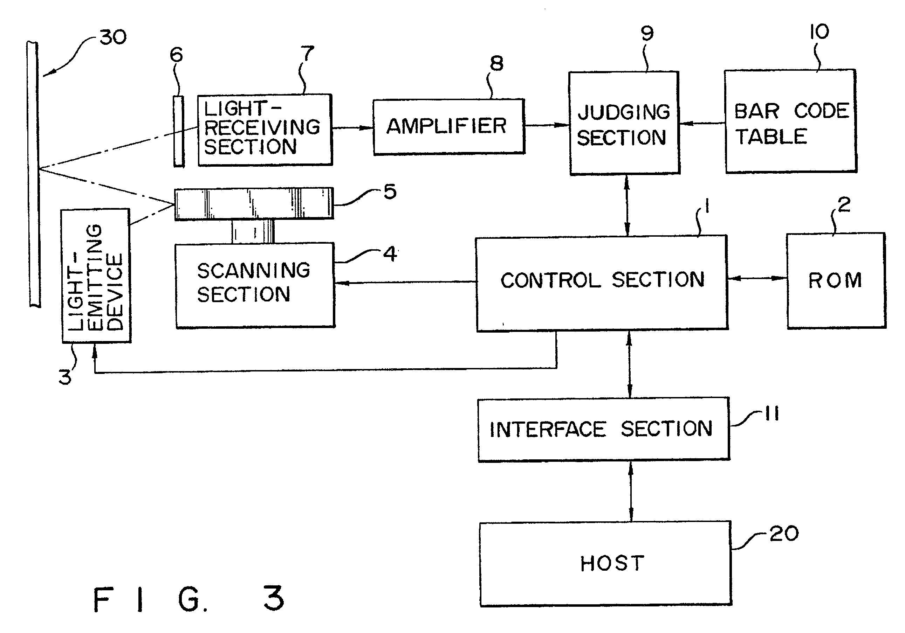

Fig. 3 is a block diagram of a bar code reading device for reading the bar code printed by the above-described processes.

The bar code reading device includes a control section 1 for controlling the entirety of this embodiment in accordance with the control procedure stored in a ROM 2, a ROM 2 for storing the control program of the control section 1 and various parameters, an ultraviolet radiation emitting device 3 for emitting radiation at a wavelength in the ultraviolet region, a scanning section 4 for rotating a polygon mirror 5 so as to enable the surface of an object 30 to be read to be scanned by the radiation from the ultraviolet radiation emitting device 3, a filter 6 for passing only light having a predetermined wavelength which is selected from the radiation emitted from the ultraviolet radiation emitting device 3, a light-receiving section 7 for receiving the light which has passed through the filter 6 and for converting the intensity of the incident light into an electric signal, an amplifier 8 for amplifying a signal which is input from the light-receiving section 7 and for outputting the amplified signal, a judging means 9 for latching bar code signals which are sent in series from the amplifier 8 and for comparing them with the values stored in a bar code table 10 every particular numbers of signals so as to judge a bar code, a bar code table 10 for storing every type of signal pattern that is read, and an interface section 11 which acts as an interface between the control section 1 and a host 20 through which the bar code data judged by the judging section 9 and recognized by the control section 1 is sent to the host 20 and through which the control section 1 is controlled by the host 20 so as to carry out the processes of the present embodiment.

In this embodiment, a bar code signal which is received by the light-receiving section 7 is recognized by known recognition processes. In a bar code, a digit or a control code is represented by three black bars (non-reflecting portions) of varied width and spacing.

Therefore, every time three non-reflecting portions are recognized, it is determined which of the patterns in the bar code table 10 corresponds to the data pattern which has been read. In actual processing, a starting code and an ending code are respectively allocated to the start and end of the bar code with numeric codes being interposed between the starting and ending codes. Data latched between the detection of the starting code or the ending code and the detection of the ending code or the starting code are batch processed. Reading direction can be determined by determining whether it is a forward read pattern or a backward read pattern. These recognition processes are known and more detailed explanations thereof are therefore omitted.

A bar code reader of the type already available on the market may be used as it is to fulfill the functions of the components subsequent to the light-receiving section 7.

In the above-described embodiments, fluorescent ink by which the reflectivity of ultraviolet radiation is changed is used as the invisible ink to print the bar code, and difference in the reflectivity of the ultraviolet radiation is detected in order to read the bar code. However, the method of printing the bar code is not limited to one which uses fluorescent ink. Any ink by which the reflectivity of ultraviolet radiation is changed may be employed. Further, the bar code may be printed prior to the printing with the visible ink instead of after it, printing with the visible ink that transmits ultraviolet radiation being done on the invisible ink in this case.

In the above-described embodiments, an ink by which reflectivity of ultraviolet radiation is varied is used as the printing ink for the bar code, and the bar code is read by emitting ultraviolet radiation. However, infrared radiation may also be used in place of ultraviolet radiation. In that case, the bar code may be printed by means of a coating by which the reflectivity of infrared radiation is changed.

In this case, a transparent polymeric coating (for example, vinyl) is used so as to make the reflectivity of infrared radiation different. An infrared laser may be used as the light-emitting section 3, and an infrared filter for transmitting infrard light alone may be used as the filter 6.

All of the above-described embodiments incorporate the polygon mirror 8 which automatically scans the object to be read. However, a pen-like member with a light-emitting section 3 and a light-receiving section 6 disposed at the forward end thereof may also be incorporated, the pen-like member being moved along the surface of the object by an operator so as to enable the bar code to be read.

Further, use of the filter 6 may be omitted in all of the above-described embodiments. This is because the bar code of these embodiments, which is generally invisible, becomes visible when a light with a particular wavelength such as ultraviolet radiation is caused to irradiate it, and because the visualized bar code can be processed by a known bar code reader. In particular, in a case where the bar code is printed at a position separate from that at which the remainder of the design on the package is printed, there is no possibility of other printing affecting the reading of the bar code, and no filter 6 is necessary.

In the above-described embodiments, since the bar code is printed with invisible ink, reading thereof is easy even if the bar code has a considerable length, making manual reading thereof easy. In the case of manual reading, reading of the bar code is made easier by providing a frame at the position where the bar code is printed.

The goods on which the bar code of the present invention are provided may be articles to which a bar code (for example, source marking of WPC in Europe and UPC in U.S.A.) is to be applied. In this case, a bar code that conforms to any of these standards may comprise the bar code of the present embodiment, and the goods can be provided with a bar code of this type as well as the bar code which is printed with the visible ink that meets standard requirements. In this case, there are a very few limitations on the size of the bar code in the present embodiment, and the accuracy with which it is read can be increased as compared with cases where just the bar code in visible ink is provided. In this case, the bars of the above-described bar code printed with visible ink may be extended so that it encloses a bar code printed with the invisible ink. This allows the position of the printing to be accurately confirmed.

The information representing various control data which need to be kept confidential may be encoded and printed.

Thus, in the present invention, the bar code is printed with invisible ink. In consequence, normal restrictions on package design are removed, and the problem of potential lowering of the value of merchandise can be avoided.

## Claims

(1) A bar code system for reading a bar code printed with an invisible ink, comprising: means for oscillating radiation with a predetermined wavelength beyond a visible spectrum; means for receiving light which is output from said radiation oscillating means and which is reflected by a bar code printed surface; and means for recognizing a bar code on the basis of the intensity of light received by said light-receiving means.

(2) A bar code system according to claim 1, wherein said invisible ink is a fluorescent ink, and said radiation oscillating means oscillates radiation with a wavelength in the ultraviolet region.

(3) A bar code system according to claim 1, wherein said invisible ink is a transparent polymetic coating, and said radiation oscillating means oscillates radiation with a wavelength in the infrared region.

(4) A bar code system according to claim 1, wherein said bar code is printed on top of a printing provided with a predetermined visible ink, said printing in said visible ink being visible.

(5) A bar code system according to claim 1, wherein said bar code has a visible portion which enables a bar code printed portion to be recognized.

(6) A bar code system according to claim 1, wherein a bar of said bar code has desired length.

(7) A bar code, comprising: a bar code printed surface which includes a visible portion printed with a visible ink, if necessary, and a bar code portion printed with an invisible ink, said bar code being read by emitting radiation at a predetermined wavelength to said bar code portion.

(8) A bar code according to claim 7, wherein said invisible ink includes a fluorescent ink which is made vibile when radiation with a wavelength in the ultraviolet region is emitted thereto.

(9) A bar code according to claim 7, wherein said invisible ink includes a transparent polymeric coating which is made vibile when radiation with a wavelength in the infrared region is emitted thereto.

(10) A bar code according to claim 7, wherein said visible portion includes a visible mark which enables a bar code printed portion to be recognized.

(11) A bar code according to claim 7, wherein said visible portion includes a visible frame which enables a bar code printed portion to be recognized.

(12) A bar code according to claim 7, wherein a bar of said bar code has a desired length.

(13) A bar code reading method comprising a step of: emitting radiation with a predetermined wavelength to a bar code printed surface which includes a visible portion printed with a visible ink, if necessary, and a bar code portion printed with an invisible ink, so as to make said bar code portion printed with said invisible ink visible.

(14) A bar code reading method according to claim 13, wherein said invisible ink includes a fluorescent ink, and said radiation with the predetermined wavelength includes radiation with a wavelength in the ultraviolet region.

(15) A bar code reading method according to claim 13, wherein said invisible ink includes a transparent polymeric coating, and said radiation with the predetermined wavelength includes the radiation with a wavelength in the infrared region.

(16) A bar code reading method according to claim 13, wherein said visible portion includes a visible mark which enables a bar code printed portion to be recognized, and scanning is performed between the adjacent visible marks.

(17) A bar code reading method according to claim 13, wherein said visible portion includes a visible frame which enables a bar code printed portion to be recognized, and scanning is performed within said visible frame.

FIG. 1

F I G.  2 (A)

F I G.  2 (B)

F I G. 3